(19) **Europäisches Patentamt**

**European Patent Office**

**Office européen des brevets**

(11) **EP 1 724 952 A1**

(12) **EUROPEAN PATENT APPLICATION**
published in accordance with Art. 158(3) EPC

(43) Date of publication:
22.11.2006 Bulletin 2006/47

(51) Int Cl.:
*H04B 10/12* (2006.01)  *G02B 6/42* (2006.01)
*H04B 10/13* (2006.01)  *H04B 10/135* (2006.01)
*H04B 10/14* (2006.01)

(21) Application number: 05720041.2

(22) Date of filing: 04.03.2005

(86) International application number:
PCT/JP2005/003769

(87) International publication number:
WO 2005/086389 (15.09.2005 Gazette 2005/37)

(84) Designated Contracting States:
AT BE BG CH CY CZ DE DK EE ES FI FR GB GR
HU IE IS IT LI LT LU MC NL PL PT RO SE SI SK TR

(30) Priority: 04.03.2004  JP 2004060562
01.10.2004  JP 2004290184

(71) Applicant: Nakagawa Laboratories, Inc.
Tokyo 141-0031 (JP)

(72) Inventors:
• HARUYAMA, Shinichiro
Zushi-shi Kanagawa 2490004 (JP)
• SUGAWARA, Y.,
Tsunashima Diamond Palace,
Room 603
Yokohama-shi, Kanagawa 2230065 (JP)

• NAKAGAWA, Masao
Yokohama-shi, Kanagawa 2250001 (JP)
• KOIKE, Yasuhiro
Yokohama-shi, Kanagawa 2250024 (JP)
• ISHIGURE, T.,
Room 511, Royal Heights Fujigaoka
Kanagawa 2270043 (JP)
• SUZUKI, Hiromasa
Hiratsuka-shi, Kanagawa 2540061 (JP)
• SHIMURA, Akihiro
Nakahara-ku, Kawasaki-shi, Kanagawa 2110 (JP)

(74) Representative: Feldmeier, Jürgen et al
Prüfer & Partner GbR
Patentanwälte
Sohnckestrasse 12
81479 München (DE)

(54) **COMMUNICATIONS SYSTEM AND LEAKAGE OPTICAL FIBER**

(57)    A communications system implementing high-speed, high-quality communication in an oblong communication range such as mobile communication, and a leaky optical fiber preferably used in such communications system are provided. An optical fiber (2) is a GI-type optical fiber having a core structured such that the refractive index at the center is large, gradually decreasing as it approaches the periphery, and may have scatterers mixed therein. When modulated light enters the optical fiber (2) from a transmitter (1), the modulated light proceeds through the optical fiber (2) while a part of the light leaks from the side thereof. A receiver (3) receives this leaked light, and demodulates it so as to obtain data. Since the optical fiber (2) is a GI type, high-speed, high-quality mobile communication is possible with little waveform deformation.

FIG. 1

EP 1 724 952 A1

## Description

TECHNICAL FIELD

The present invention relates to a communications system implementing communication in an oblong range such as mobile communication, and an optical fiber used in that communications system.

BACKGROUND ART

As a conventional technology for data transmission in an oblong communication range such as mobile communication, radio communication using leaky coaxial cables (LCX) is known. The leaky coaxial cable is slotted periodically on its outer conductor, allowing radiation of a part of VHF band radio waves propagating within the cable to the outside. The radiation electric field is nearly circularly symmetric, and the generated electric field is utilized for communication around the cable in a limited range such as on a road or in a train.

However, this technology has drawbacks in that attenuation is greater at high frequencies, and that communication speed is slow. For example, with the technology put into practical use with Shinkansen, communication speed over a single channel is 64 kbps, and since communication is carried out using forty channels, total communication speed is approximately 2.56 Mbps. This communication speed is by far slower than that with the currently used cable originated terrestrial transmission system.

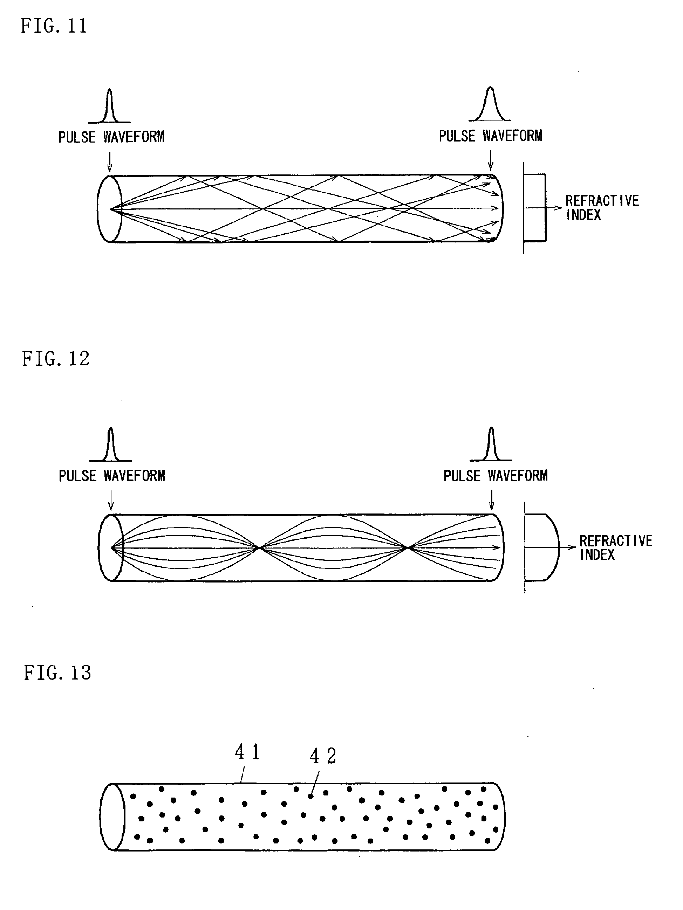

Meanwhile, optical fibers are often used as transmission channels for implementing high-speed, high-volume communication. There are two major types of optical fibers: step index type (SI type) and graded index type (GI type). FIG. 11 is a diagram explaining an SI-type optical fiber. The SI-type optical fiber has two different refractive indices that are clearly separated at the boundary of a core and cladding (in FIG. 11, only the core is shown and the cladding is omitted), and light proceeds through the fiber with total reflection off of the boundary of the core in compliance with Snell's law. In the case where the light trajectory passes along the center line and proceeds without reflecting off the boundary, it reaches the exit in the shortest period. However, in the case where it proceeds while reflecting multiple times off the boundary, it takes a longer time to reach the exit since the trajectory is longer than the center line.

Since lights progressing in various directions as such converge at the exit, even initial rising edge speed and falling edge speed become slower at the exit for light pulses that were short and sharp at the entrance, as shown in FIG. 11. As a result, high-speed data communication is impossible.

FIG. 12 is a diagram explaining a GI-type optical fiber. The GI-type optical fiber is structured such that the refractive index at the center is large, gradually decreasing as it approaches the periphery, as shown in FIG. 12.

According to this structure, the light trajectory meanders slowly in accordance with change in the refractive index. It even has a characteristic in that lights having trajectories of various directions reach the end at the same timing. In other words, although trajectory length in the case of the light trajectory proceeding passing through the center differs from that in the case of the light meandering and proceeding, the propagation times for the respective cases can be made the same. Accordingly, even if a short, sharp light pulse entering from an end reaches the exit, it is stored with hardly any distortion of waveform. As a result, high-speed data communication and increase in transmission distance are possible

Communication using such optical fiber aims to transmit data using light from one end to the other of a communication line without leaking the light. When light leaks, it results in transmission loss, and therefore carrying light from one end to the other with as little leakage of light as possible is the quintessential technology for optical fibers.

With conventional optical fiber technology, carrying light from one end to the other is the first principle for communication, trying to reduce light leakage as possible. Meanwhile, optical fibers that leak light are not used for communication, and only application of them to illumination, displays, and the like is considered.

FIG. 13 is a diagram explaining an exemplary illumination optical fiber. In the diagram, 41 denotes an SI-type optical fiber, and 42 denotes a scatterer. With illumination optical fibers, as shown in FIG. 13, for example, the scatterers 42 are mixed in the SI-type optical fiber 41, allowing light to scatter within the SI-type optical fiber 41 and then leak from the perimeter. This allows increase in the amount of leaking light. Furthermore, as a different method, a white paint or film is adhered to core sides, making the light scatter off of the boundary of the core and leak out to the exterior.

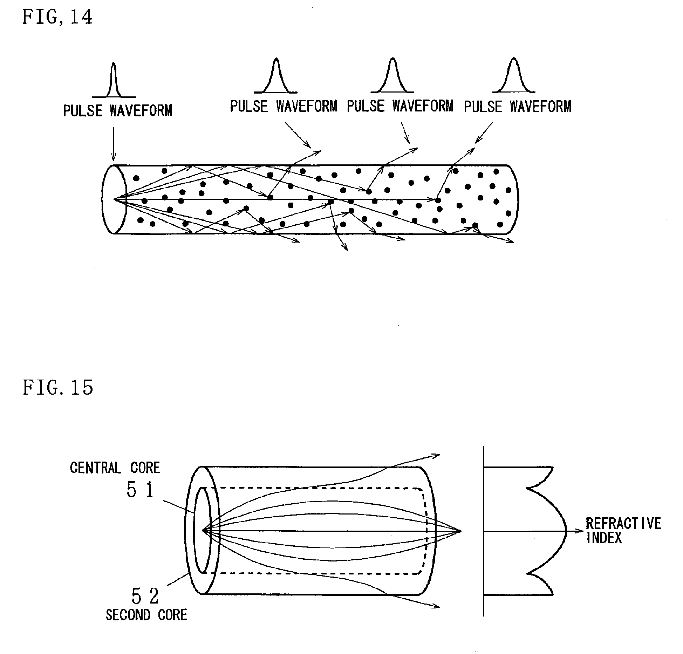

Application of these optical fibers leaking light to illumination and displays is considered, as mentioned above; however, application of them to communication is not considered yet. Even if such optical fibers leaking light were used for communication, high-speed communication would be impossible. FIG. 14 is a diagram explaining problems when using an illumination optical fiber for communication. The conventional light-leaking optical fiber for illumination and the like as mentioned above uses the SI-type optical fiber, or is structured by further mixing in scatterers. Light entering the optical fiber travels straight within the fiber core in many directions, progressing while reflecting off the boundary, and changes the traveling directions when reflection, refraction, and the like occur off of the scatterers. When the angle for the changed traveling direction is greater than the total reflectional angle according to Snell's law, light leaks out from the boundary without any reflecting. When the light repeatedly reflects off of the boundary for a long distance within the fiber without scattering, the waveform of the short light pulses deforms as with the conventional SI-type optical fiber, resulting in pulses with slower rising edges and falling edges. The waveform of the light that has leaked out of the fiber is also is similar to such deformed waveform, and configures leakage light pulses with slower rising edges and falling edges. Due to these reasons, it is difficult to use the SI-type leaky optical fiber as a leaky optical fiber for high-speed communication.

A structure differing from the conventional GI type and SI type of an optical fiber leaking light without using scatterers is invented, as described in Patent Document 1, for example. FIG. 15 is a diagram explaining an exemplary conventional leaky optical fiber. In the diagram, 51 denotes a central core and 52 denotes a second core. The leaky optical fiber shown in FIG. 15 is an optical fiber having cladding (not shown in the drawing) with a smaller reflective index in the periphery of the optical fiber core than that for the core, which is the same as with the conventional leaky optical fiber. However, the core is formed of the inner central core 51 and the outer second core 52; wherein the second core 52 is formed such that the radial refractive index distribution parabolically increases towards the outer surface. Furthermore, in order to leak light for a long distance along the length of the fiber, the core refractive index is increased along the length at a rate of 0.06%/km or greater, and the core diameter is reduced along the length at a rate of 3%/km or greater. However, preparing such fiber requires formation of the second core 52 around the central core 51, as well as increasing and decreasing the refractive index along the length and varying the diameter, which makes fabrication extremely difficult.

As described above, a technology leaking communication data from sides of a communication line already exists for radio wave and optical applications; however, a technology allowing high-speed communication and easy fabrication has not yet been invented.

[Patent Document 1] Japanese Patent Application Laid-open No. 2001-133652

DISCLOSURE OF THE INVENTION

[Problem to be Solved by the Invention]

The present invention has been developed in light of the above-given situation, and aims to provide a communications system implementing high-speed, high-quality communication in an oblong communication range such as mobile communication, and a leaky optical fiber preferably used in such communications system.

[Means for Solving the Problem]

The present invention provides a communications system, including: an optical fiber configured to transmit light modulated according to data; and a receiving means for receiving light leaked from the side of the optical fiber so as to acquire data, wherein the optical fiber is a GI-type optical fiber having a core structured such that the refractive index at the center of the core is large, gradually decreasing according to positions from the center to the periphery. With the GI-type optical fiber, intensity of the leaking light may be increased by mixing in scatterers. Furthermore, intensity of the leakage light and transmission distance may be adjusted according to a relationship between refractive indices at a central part of the optical fiber and at peripheral parts thereof.

Note that when performing communication, by providing a receiving means to a mobile body and structuring the optical fiber to not move, or inversely, providing the optical fiber in a mobile body and structuring the receiving means to not move, data may be transmitted and received by the receiving means receiving the light leaked out from the optical fiber.

Alternatively, the present invention may provide a leaky optical fiber used in the communications system of the present invention, for example, and is a GI-type optical fiber having a core structured such that the refractive index at the center is large, gradually decreasing according to positions from the center to the periphery, and that scatterers are mixed in the core.

[Effects of the Invention]

According to the present invention, since light is used for communication in an oblong communication range such as mobile communication, higher-speed, higher-quality communication than similar communication using conventional radio waves is possible. In this case, since the GI-type optical fiber is used, the waveform of the leaking light stabilizes, allowing higher-speed, higher-quality communication. Furthermore, a communications system may be constructed at a low cost without using such conventional special leaky optical fiber.

Moreover, mixing scatterers in the GI-type optical fiber allows increase in the amount of light leaking from the optical fiber, resulting in provision of further reliable communication.

BRIEF DESCRIPTION OF THE DRAWINGS

FIG. 1 is a schematic diagram showing an embodiment of a communications system of the present invention;

FIG. 2 is a diagram explaining a light leakage principle for an optical fiber used in the communications system of the present invention;

FIG. 3 is graph showing in detail a relationship between distance from an end of an exemplary leaky optical fiber of the present invention, and leakage light intensity distribution;

FIG. 4 is graph showing in detail a relationship between distance from an end of an exemplary GI-type optical fiber in which scatterers are not mixed, and leakage light intensity distribution;

FIG. 5 is a diagram explaining in detail leakage light radiation distribution for the leaky optical fiber of the present invention;

FIG. 6 is a diagram explaining an exemplary waveform of light transmitted through the leaky optical fiber of the present invention;

FIG. 7 is graph showing in detail a relationship between distance from an end of the leaky optical fiber of the present invention, and bandwidth;

FIG. 8 is a diagram explaining a relationship between angle of incidence to the optical fiber and reflection within the fiber;

FIG. 9 is a graph showing exemplary relationships between distance and leakage light intensity for different respective numerical apertures NA;

FIG. 10 is a diagram explaining an exemplary application of the communications system of the present invention using the leaky optical fiber of the present invention;

FIG. 11 is a diagram explaining an SI-type optical fiber;

FIG. 12 is a diagram explaining a GI-type optical fiber;

FIG. 13 is a diagram explaining an exemplary optical fiber for illumination;

FIG. 14 is a diagram explaining problems when using the illumination optical fiber for communication; and

FIG. 15 is a diagram explaining a conventional leaky optical fiber.

BEST MODE FOR CARRYING OUT THE INVENTION

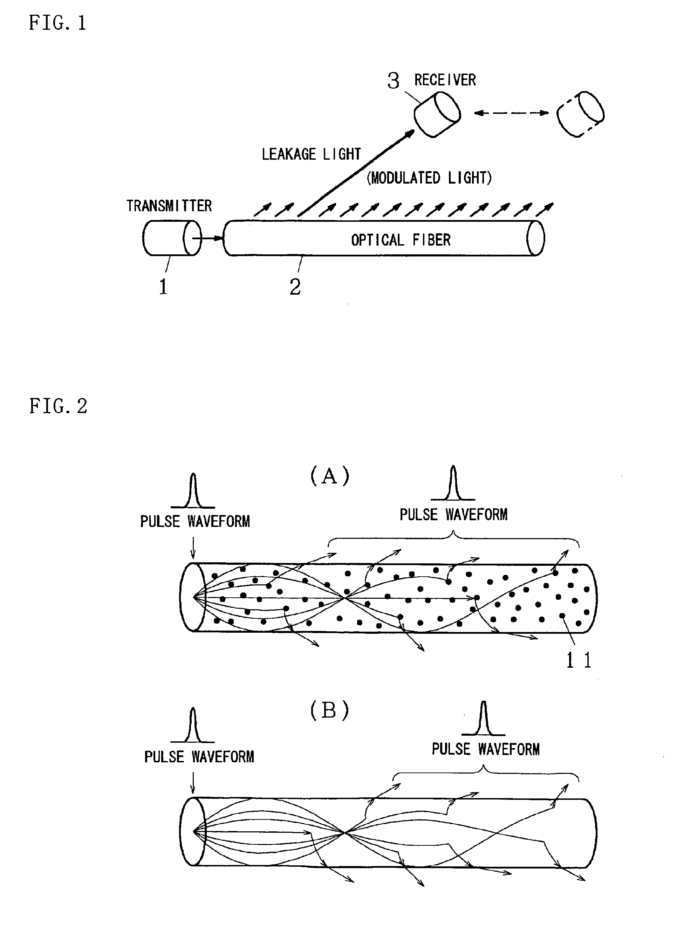

FIG. 1 is a schematic diagram showing an embodiment of a communications system of the present invention. In the diagram, 1 denotes a transmitter, 2 denotes an optical fiber, and 3 denotes a receiver. The transmitter 1 emits to the optical fiber 2 light modulated according to data to be transmitted. It may be structured such that a laser beam enters the optical fiber 2 using a laser diode (LD) or the like, for example. Naturally, the light source is not limited to a laser diode, and an LED or the like may be used as the light source for the transmitter 1 as long as the amount of light or blinking can be quickly controlled.

The optical fiber 2 is a GI-type optical fiber having a core structured such that the refractive index at the center is large, gradually decreasing towards the periphery. Particularly with the communications system of the present invention, the leaky optical fiber of the present invention, which is fabricated by mixing scatterers in the GI-type optical fiber so as to increase intensity of the leaking light, may be used as the optical fiber 2. For fabrication of such optical fiber 2, an already established fabrication method for the GI-type optical fiber may be used, allowing easy fabrication.

The light that has entered a side of the optical fiber 2 from the transmitter 1 meanders and proceeds through the optical fiber 2 but a part of the light leaks from the side thereof. As a result, light modulated according to data is emitted to an oblong range in which the optical fiber 2 is provided.

The receiver 3 receives the modulated light leaking from the side of the optical fiber 2, and demodulates it so as to receive data. In the oblong range extending along the length of the optical fiber 2, light modulated according to the same data is leaked from the optical fiber 2. Therefore, even when the receiver 3 and the optical fiber 2 are moving relative to each other, communication may be continued by the receiver 3 receiving the leaked light from the optical fiber 2.

Note that provision of a relay unit having a receiver and a light emitter on the opposite end of the optical fiber 2 than the transmitter 1, and transmission of light radiated from the light emitter of the relay unit to a different optical fiber allow extremely long distance communication.

FIG. 2 is a diagram explaining a light leakage principle for an optical fiber used in the communications system of the present invention. 11 denotes a scatterer. FIG. 2(A) shows a case of using the leaky optical fiber of the present invention, which is fabricated by mixing the scatterers 11 in a GI-type optical fiber, and FIG. 2(B) shows a case of using the conventional GI-type optical fiber.

Since the GI-type optical fiber is used as the optical fiber 2 in the communications system of the present invention, due to the characteristics thereof, light entering the optical fiber 2 from the transmitter 1 meanders and proceeds through the optical fiber 2. When using the leaky optical fiber of the present invention as the optical fiber 2, the path for the light changes due to reflection and refraction when it bombards the scatterers 11 indicated by black dots in FIG. 2(A). When the light having changed its path reaches the boundary of the optical fiber 2 at an angle of incidence being the critical angle or less, it then leaks to the outside. This leaked light should be received by the receiver 3.

The light meanders and proceeds through the optical fiber 2 at the same timing as with the conventional GI-type optical fiber until it is reflected and refracted off of the scatterers in the optical fiber 2. Therefore, even when light bombards the scatterers 11 and then reflects and refracts, resulting in the path thereof changing and light leaking out of the optical fiber 2, that leaked light also leaks to the outside of the optical fiber 2 at the same timing. In other words, even if a short, sharp light pulse entering from an end leaks out of the fiber in the middle, it is stored with hardly any distortion of waveform. This allows high-speed, high-quality data communication. Furthermore, even if the light is reflected and refracted multiple times off the scatterers 11 in the optical fiber 2, since there is only a slight possibility that light will remain in the optical fiber 2 without leaking out, delay spread due to multiple times of reflection and refraction does not increase.

This kind of characteristic cannot be obtained with the conventional leaky optical fiber. Furthermore, the GI-type optical fiber has been developed for only transmitting light through the fiber, and there have not yet been any effort to utilize the leaked light from the GI-type optical fiber. Use of the GI-type optical fiber allows high-speed gigabit communication.

Changing the concentration of the scatterers 11 in the leaky optical fiber of the present invention shown in FIG. 2(A) allows fabrication of leaky optical fibers with various characteristics. More specifically, a denser concentration of the scatterers 11 makes more light leak, strengthening the power of the leaked light. However, the more light that leaks, the shorter the transmission distance becomes. On the other hand, while a thinner concentration of the scatterers 11 weakens the power of the leaked light, the transmission distance maybe lengthened. As an extreme example, even when the scatterers 11 are not mixed in as shown in FIG. 2(B), a small amount of light leaks from the optical fiber 2 due to impurities within the optical fiber 2 working as scatterers, or due to irregularities and the like caused during fabrication. This has been confirmed experimentally, and communication is possible even using that very little amount of leakage light.

The leaky optical fiber of the present invention is described forthwith in detail. For the leaky optical fiber of the present invention, a methacrylic resin called poly methyl methacrylate (PMMA) may be used as the core, and spherical silicone resin particles called Tospearl with 7.3 $\mu$m diameters may be used as the scatterers. Use of these materials in interfacial gel polymerization has led to successful creation of an optical fiber 1 mm in diameter including scatterers with a GI-type refractive index distribution. Tospearl is excellent in water repellency, lubricity, and heat resistance, have uniform particle diameters and a sharp particle diameter distribution, and are thus appropriate as light scatterers. When a red visible light laser beam 670 nm in wavelength is given to such leaky optical fiber of the present invention, light leaks from the fiber surface effectively.

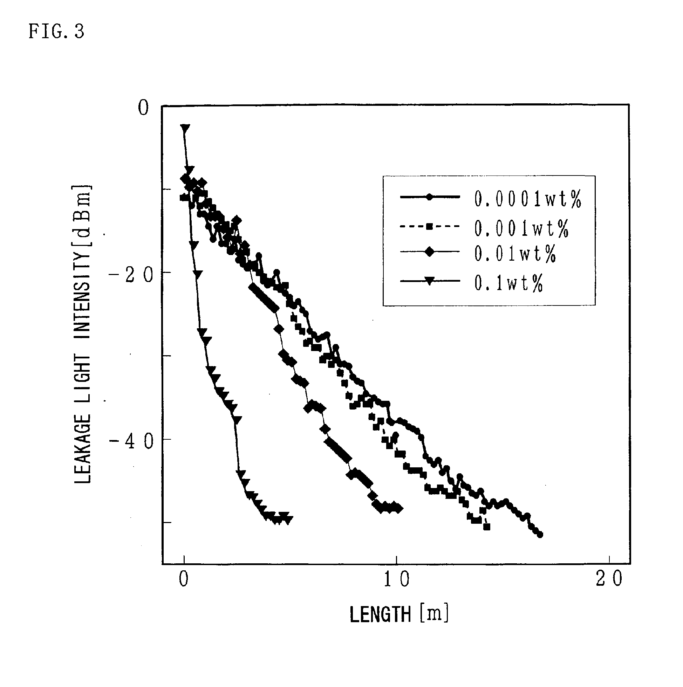

FIG. 3 is graph showing in detail a relationship between distance from an end of an exemplary leaky optical fiber of the present invention, and leakage light intensity distribution. FIG. 3 shows a relationship between the distance from the incident end, which is represented by the lateral axis, and the intensity (power) of the leaked light, which is represented by the longitudinal axis, when a 100 mW laser is given into the leaky optical fiber of the present invention. Further in FIG. 3, leakage light intensity is measured for multiple leaky optical fibers fabricated by mixing Tospearl and PMMA at different weight mixture ratios (wt%). As a result, in the example of a weight mixture ratio of 0.1 wt% in which the most amount of Tospearl or scatterers is mixed, the leakage light intensity has fallen to -50 dBm at approximately 5 meters from the incident end. However, in the example of a weight mixture ratio of 0.0001 wt%, a certain amount of optical leakage can be observed up to around 20 meters. Since the sensitivity of a conventional avalanche photo diode (APD) is approximately -50 dBm, communication up to around 15 meters may be possible if such a photo diode is used for the receiver 3. On the other hand, in a region near the incident end, the greater the amount of Tospearl or scatterers, the greater the leakage light intensity. By changing the concentration of scatterers in this manner, the intensity of the leakage light may be controlled.

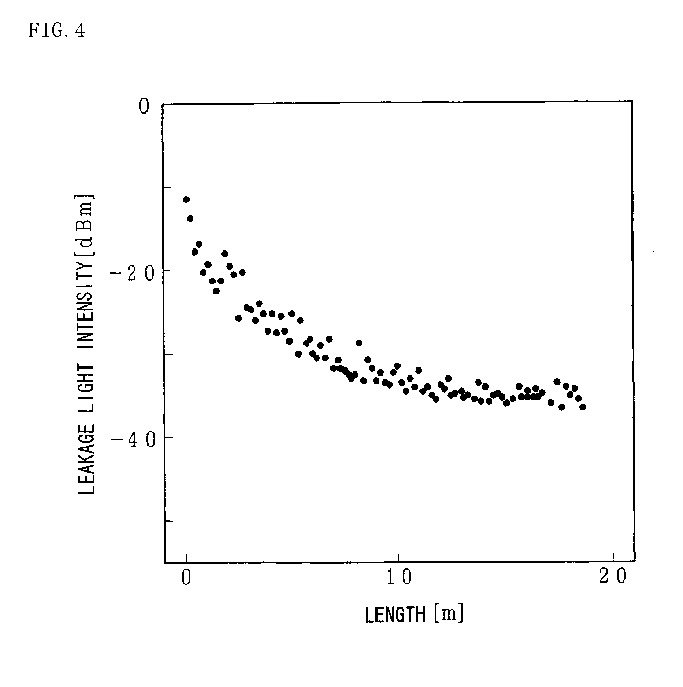

FIG. 4 is graph showing in detail a relationship between distance from an end of an exemplary GI-type optical fiber in which scatterers are not mixed, and leakage light intensity distribution. Compared to the optical fiber of the present invention in which the scatterers shown in FIG. 3 are mixed in, it is observed that the leakage light intensity is weak in the region near the incident end, however, light leaks over a longer distance, and that at a distance of 15 meters the leakage light intensity is 15 dB stronger than with the 0.0001 wt% and is approximately -35 dBm even at 20 meters or more, which allows communication.

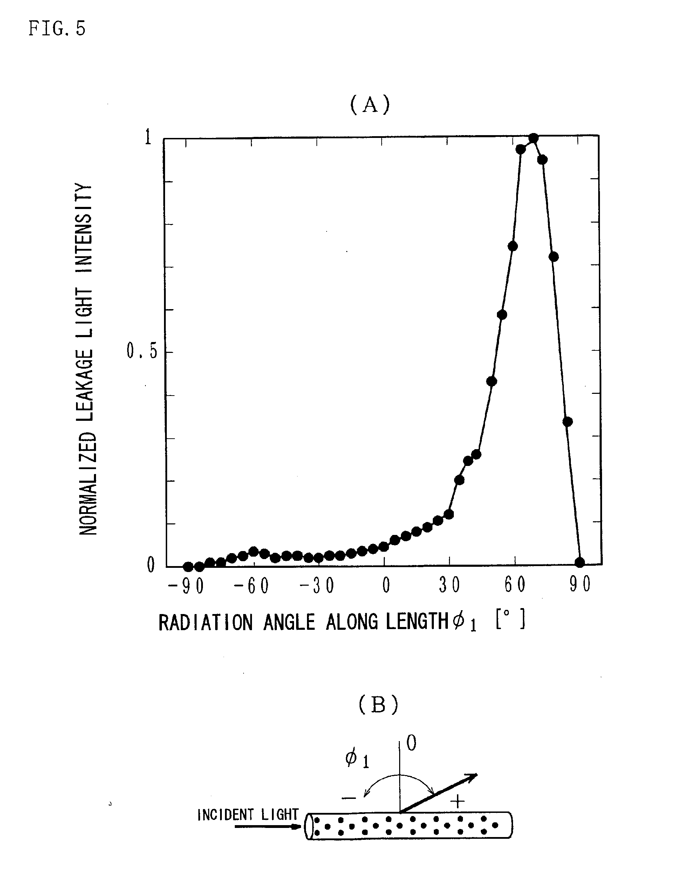

FIG. 5 is a graph explaining in detail a leakage light radiation distribution for the leaky optical fiber of the present invention. Angle Φ1 in FIG. 5(A) indicates an angle between the traveling direction of light within the optical fiber and direction perpendicular to the optical fiber as shown in FIG. 5(B). It can be observed that the angle Φ1 is approximately 70 degrees, as shown in FIG. 5, in other words, light leaks most intensely at a 20 degree angle from the traveling direction along the fiber.

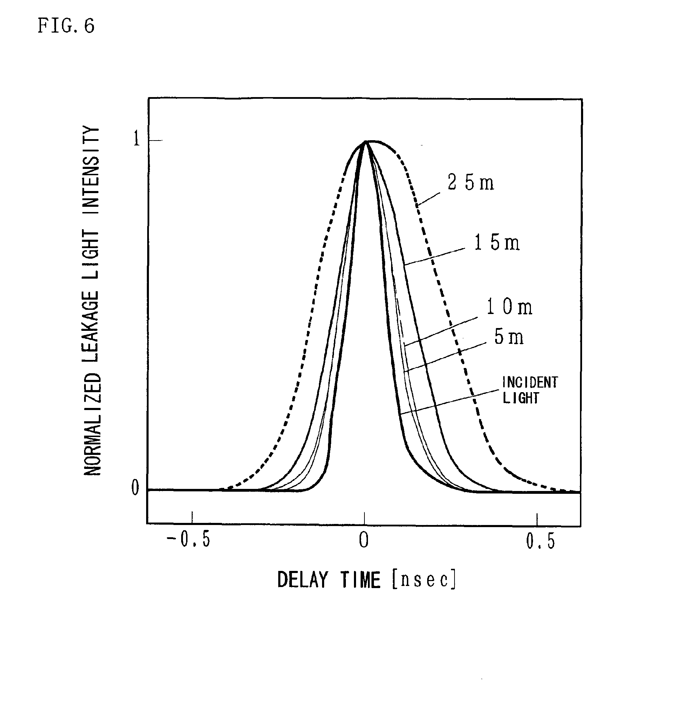

FIG. 6 is a graph explaining exemplary waveforms of light transmitted through the leaky optical fiber of the present invention. How the waveforms of optical pulses, which enter from the incident end of the leaky optical fiber, change according to distance from the incident end is shown in FIG. 6. In this case, an optical pulse with a pulse width of 0.15 nsec is entered. It is observed that though the pulse width widens as the transmission length increases, it only widens approximately 0.5 nsec when the light has traveled 25 meters, and the wavelength has barely deformed.

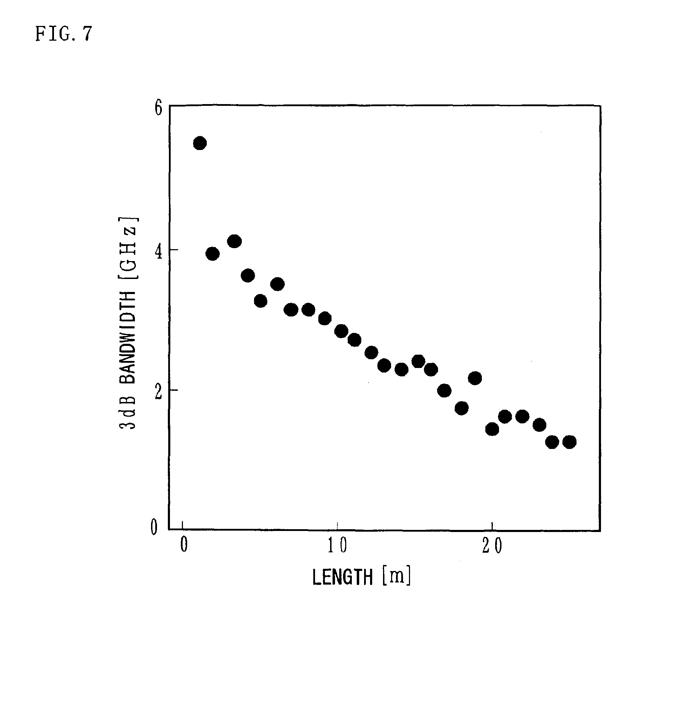

FIG. 7 is graph showing in detail a relationship between distance from an end of the leaky optical fiber of the present invention and bandwidth. FIG. 7 shows results from calculating a 3dB bandwidth by subjecting the measurements of the optical pulse waveforms, shown in FIG. 6, to Fourier transform. According to these results, a band of approximately 1 GHz may be ensured even at distances exceeding 20 meters. Therefore, use of the leaky optical fiber of the present invention may allow communication of 1 GHz or greater at a distance of approximately 20 meters.

In this manner, use of the leaky optical fiber of the present invention allows high-speed communication without hardly any widening of the pulse waveform. Note that each of the above-given measurements is for a prototype sample, and there is plenty of room for improvement in performance. Naturally, it is needless to say that the material of the optical fiber core and the material and diameter of the scatterers are not limited to the above example.

As shown in FIG. 4, use of the GI-type optical fiber without mixing in the scatterers and the leakage light also allows successful communication. In this case, intensity of the leakage light and transmission distance may be adjusted in accordance with the relationship between the refractive indices at the central part of the optical fiber and at the peripheral parts thereof. An optical fiber usually refracts and transmits light therein using characteristics of the difference between the refractive indices at the central part and at the peripheral parts thereof. However, at angles of incidence equal to or greater than the maximum angle (critical angle of incidence θmax) defined by both refractive indices, leakage light travels out to the exterior from the inside of the optical fiber.

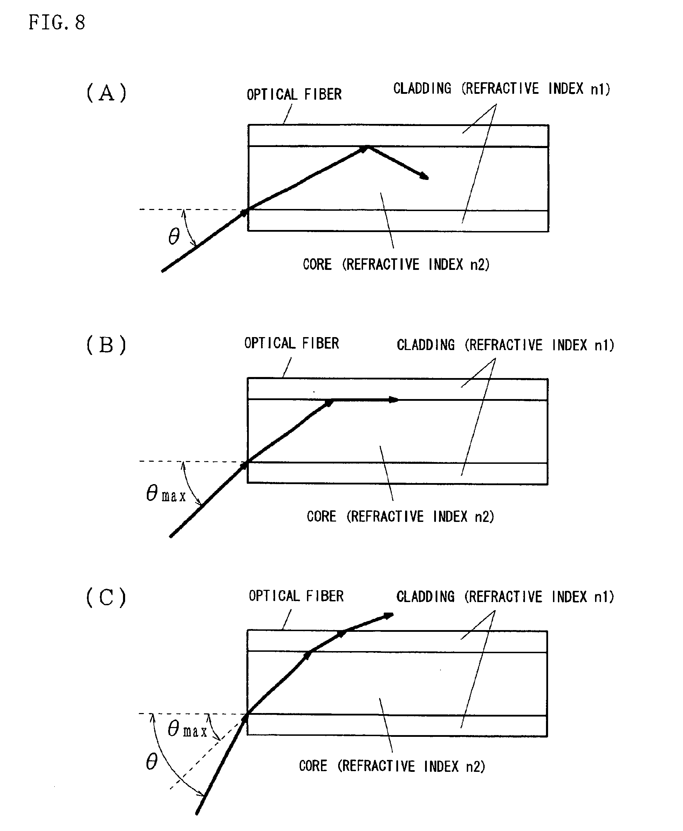

FIG. 8 is a diagram explaining a relationship between angle of incidence to the optical fiber and reflection within the fiber. The present invention uses the GI-type optical fiber, but for the sake of simplicity, use of the SI-type optical fiber shown in FIG. 8 will be described. n2 denotes the refractive index at the core or the central part of the optical fiber, and n1 denotes the refractive index at the cladding or the peripheral parts. Generally, a relationship of n1<n2 holds true.

As shown in FIG. 8(A), if an angle of incidence θ to the optical fiber is smaller than the critical angle of incidence θmax, reflection occurs at the boundary of the core and the clad due to the difference in refractive index at the core and the cladding, thereby proceeding the incident light through the optical fiber. When the angle of incidence to the optical fiber is the critical angle of incidence θmax, the light refracts and proceeds along the boundary of the core and the cladding, as shown in FIG. 8(B). When the angle of incidence to the optical fiber is greater than the critical angle of incidence θmax, the light refracts at the boundary of the core and the cladding, passes through the cladding, and then leaks to the outside, as shown in FIG. 8(C).

The above-given critical angle of incidence θmax is defined by the core refractive index n2 and the cladding refractive index n1, and can be calculated using the following equations:

$$\theta max = n1 \cdot \sqrt{(2 \cdot \Delta)} \quad \Delta = (n1 \cdot n2) / n1$$

The sine of this critical angle of incidence θmax, namely sin(θmax) is called numerical aperture (hereafter, referred to as NA). It is well known that the larger the numerical aperture NA, the smaller the loss of light reaching from one end of the optical fiber to the other. On the other hand, when the numerical aperture NA is small, leaking light increases, and in communication using the leaking light, signal strength may be stronger. In this case, the distance it takes for the light to leak is reduced.

Such a relationship is not limited to the SI-type optical fiber, and the same relationship applies to the GI-type optical fiber. In the case of the GI-type optical fiber, although the refractive index gradually changes according to positions from the center to the periphery, the same as given above holds true for the relationship between the refractive indices at the central part and at the peripheral parts.

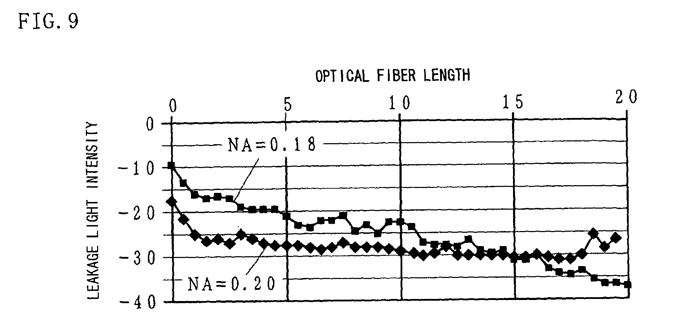

FIG. 9 is a graph showing an exemplary relationship between distance and leakage light intensity depending on differences in numerical aperture NA. The example of FIG. 9 shows measurements of leakage light intensity at 0 to 20 meters when using GI-type optical fibers having two numerical apertures NA: 0.20 and 0.18. As a result, in the case of NA=0.18, more light leaked out at a distance up to 15 m than in the case of NA=0.20, yet less light leaked at a distance greater than 15 m. This may suggest that an optical fiber with a small numerical aperture NA should be used when strong leakage light is required, and an optical fiber with a large numerical aperture NA should be used for longer distance communication.

In this manner, by adjusting the numerical aperture NA (or critical angle of incidence θmax) of the optical fiber, namely, adjusting the refractive index n2 at the central part of the optical fiber and the refractive index n1 at the peripheral parts, a stronger leakage light may be achieved, and longer distance communication is possible.

Note that when scatterers are mixed in, influence of those scatterers is stronger; however, even in this case, the numerical aperture NA (or critical angle of incidence θmax) may be adjusted by adjusting the refractive index n2 at the central part of the optical fiber and the refractive index n1 at the peripheral parts as described above, and the leakage light intensity and the transmission distance may also be adjusted.

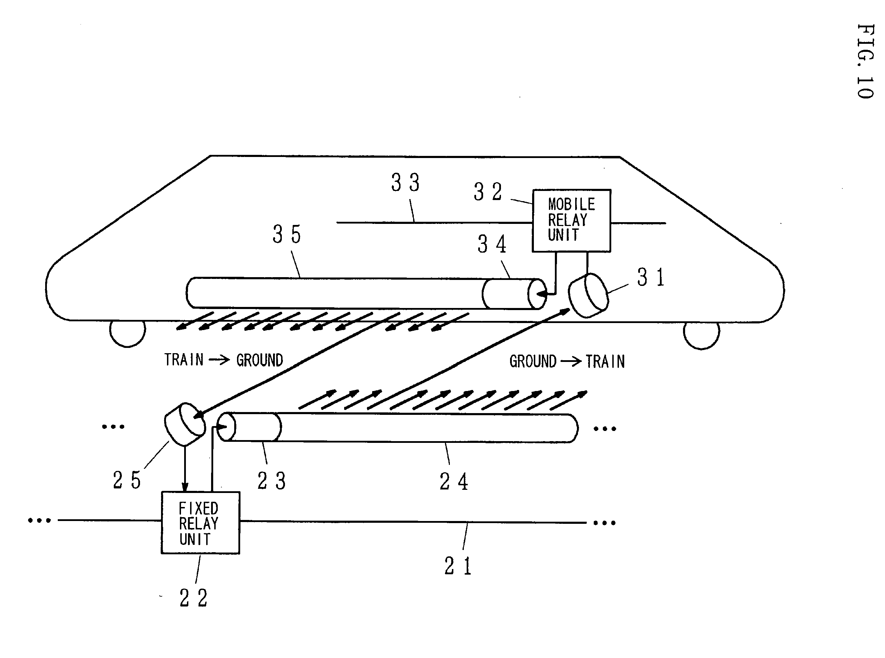

FIG. 10 is a diagram explaining an application of the communications system of the present invention using the leaky optical fiber of the present invention. In the diagram, 21 denotes a fixed network, 22 denotes a fixed relay unit, 24 denotes fixed optical fiber, 25 denotes a fixed receiver, 31 denotes a mobile receiver, 32 denotes a mobile relay unit, 33 denotes a mobile network, 34 denotes a mobile transmitter, and 35 denotes a mobile optical fiber. Use of the leaky optical fiber of the present invention as described above allows establishment of a communications system for communication between, for example, a mobile body and a fixed unit on the ground. An application to communication with a train is shown in FIG. 10 as an example thereof. Note that the example of FIG. 10 provides a one-way communications system as shown in FIG. 1 to a fixed side such as on the ground and to a mobile side such as a train, respectively, allowing two-way communication.

The fixed receiver 25, the fixed optical fiber 24, the fixed transmitter 23, fixed relay unit 22 connected to the fixed network 21 or the like are provided to the ground side. The fixed relay unit 22 acquires data to be transmitted to the train from the fixed network 21, and then relays that data to the fixed transmitter 23. The fixed transmitter 23 makes light modulated in accordance with the data received from the fixed relay unit 22 enter the fixed optical fiber 24. The fixed optical fiber 24 is the leaky optical fiber of the present invention, and is laid at the side of a railway or side of overhead wire, for example, near to where the train runs. The modulated light that has entered the fixed optical fiber 24 from the fixed transmitter 23 proceeds through the fixed optical fiber 24 as is, but light leaks from the side of the fixed optical fiber 24 at the same time.

Meanwhile, the train or mobile body is provided with the mobile relay unit 32 connected to the mobile network 33 in the train, the mobile receiver 31, the mobile transmitter 34, the mobile optical fiber 35, and the like. Leakage light from the fixed optical fiber 24 can be received by the mobile receiver 31, as described above. Demodulation of this light by the mobile receiver 31 allows provision of data. The provided data is sent to the mobile relay unit 32 and then transmitted to the mobile network 33.

In this manner, transmission of data from the ground to the train is possible. While the train is moving at a high speed, the same data is transmitted within a zone in which a single fixed optical fiber 24 is provided. This allows stable reception of leakage light from the fixed optical fiber 24 even if the train is moving, and therefore reception of the data.

Note that by consecutively deploying the fixed optical fiber 24 as shown in FIG. 10, the leakage light from the fixed optical fibers 24 provided next to each other is received as the train continues to run, allowing reception of the data. Since great leakage light intensity can be currently provided from a single fixed optical fiber 24 only at around several meters as described above, alignment of the sufficiently long fixed optical fibers 24 as shown in FIG. 10 allows continuous communication even along a long railway.

The data to be transmitted to the ground from the train is sent from the mobile network 33 to the mobile transmitter 34 via the mobile relay unit 32. The mobile transmitter 34 makes light modulated in accordance with the data received from the mobile relay unit 32 enter the mobile optical fiber 35. The mobile optical fiber 35 is also the leaky optical fiber of the present invention, and is provided in the direction that the train travels. The modulated light that has entered the mobile optical fiber 35 from the mobile transmitter 34 proceeds through the mobile optical fiber 35 as is, but light leaks from the side of the mobile optical fiber 35 at the same time.

The leakage light from the mobile optical fiber 35 provided on the train is received by the fixed receiver 25 provided at the side of a railway or overhead wire, and demodulated data is then received. The received data is transmitted through the fixed network 21 via the fixed relay unit 22.

In this manner, transmission of data from the train to the ground is possible. While the train is moving at a high speed and the mobile optical fiber 35 is also moving accordingly, it takes a certain amount of time for the entire mobile optical fiber 35 to pass over the ground receiver 25. Stable communication is possible during this period. By providing the receiver 25 on the ground side at intervals equal to or less than the length of the mobile optical fiber 35, and successively switching over receivers 25, each trying to receive the leakage light from the mobile optical fiber 35, or afterwards interlinking pieces of data received by the respective receivers 25, complete data from the train may be received continuously.

In this manner, two-way communication may be implemented using communication from the ground to the train, and vice versa. In this case, communication from the ground to the train and vice versa at almost the same high speed such as gigabits per second or more is possible. Taking into consideration that the speed of mobile communication in the conventional Shinkansen is approximately 2.56 Mbps in total, the communications system of the present invention may be capable of much higher-speed communications. Accordingly, various services may be provided to passengers, and train control or the like utilizing large quantities of data communication is possible. Improvement in infrastructure for such high-speed communication means to lay the leaky optical fiber of the present invention or the conventionally used GI-type optical fiber. Since the leaky optical fiber of the present invention and the GI-type optical fiber can be easily fabricated with an inexpensive material as described above, costs for infrastructure improvement can be suppressed.

Naturally, the mobile body is not limited to a train, and even with an automobile or the like, the same high-speed communication may be implemented between the automobile and the road if the optical fiber is laid at the roadside as the fixed side.

**Claims**

1. A communications system, comprising:

   an optical fiber configured to transmit light modulated according to data; and
   a receiving means for receiving light leaked from the side of the optical fiber so as to acquire data,

   wherein the optical fiber is a GI-type optical fiber having a core structured such that the refractive index at the center of the core is large, gradually decreasing according to positions from the center to the periphery.

2. The communications system according to Claim 1, wherein the optical fiber has scatterers mixed therein.

3. The communications system according to Claim 1, wherein leakage light intensity and transmission distance are adjusted according to a relationship between refractive indices at a central part of the optical fiber and at peripheral parts thereof.

4. The communications system according to any one of Claim 1 through Claim 3, wherein the receiving means is provided in a mobile body, and the optical fiber does not move.

5. The communications system according to any one of Claim 1 through Claim 3, wherein the optical fiber is provided in a mobile body, and the receiving means does not move.

6. A leaky optical fiber having a core structured such that the refractive index at the center of the core is large, gradually decreasing according to positions from the center to the periphery, and that scatterers are mixed in the core.

FIG. 1

FIG. 2

FIG. 3

FIG. 4

FIG. 5

(A)

(B)

FIG. 6

FIG. 7

FIG. 8

(A)

OPTICAL FIBER      CLADDING (REFRACTIVE INDEX n1)

$\theta$

CORE (REFRACTIVE INDEX n2)

(B)

OPTICAL FIBER      CLADDING (REFRACTIVE INDEX n1)

$\theta_{max}$

CORE (REFRACTIVE INDEX n2)

(C)

OPTICAL FIBER      CLADDING (REFRACTIVE INDEX n1)

$\theta_{max}$

$\theta$

CORE (REFRACTIVE INDEX n2)

FIG. 9

FIG. 10

EP 1 724 952 A1

FIG. 11

PULSE WAVEFORM     PULSE WAVEFORM

REFRACTIVE INDEX

FIG. 12

PULSE WAVEFORM     PULSE WAVEFORM

REFRACTIVE INDEX

FIG. 13

4 1     4 2

FIG, 14

PULSE WAVEFORM    PULSE WAVEFORM  PULSE WAVEFORM  PULSE WAVEFORM

FIG. 15

CENTRAL CORE

5 1

5 2
SECOND CORE

REFRACTIVE
INDEX

<table>
<tr><td colspan="2" align="center">**INTERNATIONAL SEARCH REPORT**</td><td colspan="2">International application No.<br><br>PCT/JP2005/003769</td></tr>
</table>

A.  CLASSIFICATION OF SUBJECT MATTER
    Int.Cl⁷ H04B10/12, G02B6/42, H04B10/13, 10/135, 10/14

According to International Patent Classification (IPC) or to both national classification and IPC

B.  FIELDS SEARCHED

Minimum documentation searched (classification system followed by classification symbols)
    Int.Cl⁷ H04B10/12, G02B6/42, H04B10/13, 10/135, 10/14

Documentation searched other than minimum documentation to the extent that such documents are included in the fields searched
    Jitsuyo Shinan Koho          1922-1996   Jitsuyo Shinan Toroku Koho   1996-2005
    Kokai Jitsuyo Shinan Koho    1971-2005   Toroku Jitsuyo Shinan Koho   1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2001-308798 A  (Hokuyo Automatic Co., Ltd.),<br>02 November, 2001 (02.11.01),<br>Claim 1; Figs. 7, 9<br>(Family: none) | 1-5 |
| Y | JP 2001-133652 A  (Hitachi Cable, Ltd.),<br>18 May, 2001 (18.05.01),<br>Claim 1; Fig. 1<br>(Family: none) | 1-6 |
| Y | JP 63-199303 A  (Fujikura Densen Kabushiki Kaisha),<br>17 August, 1988 (17.08.88),<br>Claim 1; Figs. 1 to 3, 5<br>(Family: none) | 2,6 |

[X] Further documents are listed in the continuation of Box C.        [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    31 May, 2005 (31.05.05) | Date of mailing of the international search report<br>    21 June, 2005 (21.06.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/003769 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-18093 A  (Hokuyo Automatic Co., Ltd.),<br>17 January, 2003 (17.01.03),<br>Claim 1; Figs. 1, 2<br>(Family: none) | 1-6 |
| A | JP 5-281393 A  (Toshiba Corp.),<br>29 October, 1993 (29.10.93),<br>Claim 1; Figs. 1, 2<br>(Family: none) | 1-6 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001133652 A